# EUROPEAN PATENT APPLICATION

(11) **EP 2 226 564 A2**
(43) Date of publication of application: **08.09.2010**
(21) Application number: 10155193.5
(22) Date of filing: 02.03.2010
(51) Int. Cl.: F23R 3/46, F23R 3/04

(54) **Pattern cooled combustor liner**

(30) Priority: 04.03.2009 US 398131
(71) Applicant: General Electric Company, Schenectady, NY 12345 (US)
(72) Inventor: Chila, Ronald James, Greer, SC 29650 (US); Wu, Sheng-Yi, Greer, SC 29650 (US)
(74) Representative: Gray, Thomas

(57) **Abstract**

A system, in one embodiment, includes a turbine combustor liner (34). The combustor liner (34) includes a patterned surface (62) at a downstream end portion (52) relative to a downstream direction of combustion along a longitudinal axis of the turbine combustor liner (34). The patterned surface (62) includes a plurality of discrete protrusions (72) in both axial and circumferential directions about the downstream end portion (52) relative to the longitudinal axis of the turbine combustion liner (34).

## Description

### BACKGROUND OF THE INVENTION

The subject matter disclosed herein relates to gas turbine engines and, more specifically, to a system for cooling a combustor liner used in a combustor of a gas turbine engine.

Gas turbine engines typically include a combustor having a combustor liner defining a combustion chamber. Within the combustion chamber, a mixture of compressed air and fuel is combusted to produce hot combustion gases. The combustion gases may flow through the combustion chamber to one or more turbine stages to generate power for driving a load and/or a compressor. Typically, the combustion process heats the combustor liner due to the hot combustion gases. Unfortunately, existing cooling systems may not adequately cool the combustor liner in all conditions.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one embodiment, a system includes a turbine engine. The turbine engine includes a combustor having an annular liner. The annular liner includes a downstream end portion relative to a downstream direction of combustion along a longitudinal axis of the combustor. The downstream end portion includes a pattern surface having a non-linear arrangement of surface features relative to the longitudinal axis of the turbine combustion liner.

In another embodiment, a system includes a turbine combustor liner. The combustor liner includes a patterned surface at a downstream end portion relative to a downstream direction of combustion along a longitudinal axis of the turbine combustor liner. The patterned surface includes a plurality of discrete protrusions in both axial and circumferential directions about the downstream end portion relative to the longitudinal axis of the turbine combustion liner.

In yet another embodiment, a method includes cooling a turbine combustor liner by way of an airflow along a flow path through a patterned surface having a plurality of discrete protrusions in both axial and circumferential directions about a downstream end portion of the turbine combustor liner.

### BRIEF DESCRIPTION OF THE DRAWINGS

There follows a detailed description of embodiments of the invention by way of example only with reference to the accompanying drawings, in which:

FIG. 1 is a block diagram of a turbine system having a combustor liner with a patterned surface for enhanced cooling, in accordance with an embodiment of the present technique;

FIG. 2 is a cutaway side view of the turbine system, as shown in FIG. 1, in accordance with an embodiment of the present technique;

FIG. 3 is a cutaway side view of the combustor, as shown in FIG. 1, having a combustor liner with a patterned surface at a downstream end portion in accordance with an embodiment of the present technique;

FIG. 4 is an exploded perspective view of certain components of the combustor, as shown in FIG. 3, in accordance with an embodiment of the present technique.

FIG. 5 is a partial perspective view of a portion of the patterned surface on the downstream end portion of the combustor liner, as shown in FIG. 4, in accordance with an embodiment of the present technique;

FIG. 6 is a partial cross-sectional side view of the downstream end portion of the combustor liner, as shown in FIG. 3, in accordance with an embodiment of the present technique;

FIGS. 7A-7D are partial cross-sectional side views of the patterned surface on the downstream end portion of the combustor liner, in accordance with several embodiments of the present technique;

FIGS. 8A-8E are partial top views of the patterned surface on the downstream end portion of a combustor liner, in accordance with several embodiments of the present techniques; and

FIGS. 9A and 9B are partial top and corresponding cutaway side views, respectively, of a patterned surface on the downstream end portion of the combustor, liner in accordance with a further embodiment of the present technique.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment" or "an embodiment" of the present invention are not intended to be interpreted as excluding the existence of additional embodiments that also incorporate the recited features.

Before continuing, several terms used extensively throughout the present disclosure will be first defined in order to provide a better understanding of the claimed subject matter. As used herein, the terms "upstream" and "downstream," when discussed in conjunction with a combustor liner, shall be understood to mean the proximal end of the combustor liner and the distal end of the combustor liner, respectively, with respect to the fuel nozzles. That is, unless otherwise indicated, the terms "upstream" and "downstream" are generally used with respect to the flow of combustion gases inside the combustor liner. For example, a "downstream" direction refers to the direction in which a fuel-air mixture combusts and flows from the fuel nozzles towards a turbine, and an "upstream" direction refers to the direction opposite the downstream direction, as defined above. Additionally, the term "downstream end portion," "coupling portion," or the like, shall be understood to refer to an aft-most (downstream most) portion of the combustor liner. As will be discussed further below, the axial length of the downstream end portion of the combustor liner, in certain embodiments, may be the as much as 20 percent the total axial length of the combustor liner. The downstream end portion (or coupling portion), in some embodiments, may also be understood to be the portion of the liner that is configured to couple to a downstream transition piece of the combustor, generally in a telescoping, concentric, or coaxial overlapping annular relationship. Further, where the term "liner" appears alone, it should be understood that this term is generally synonymous with "combustor liner."

Keeping in mind the above-defined terms, the present disclosure is directed towards a combustor liner capable of providing for more effective cooling during the operation of a turbine engine. In one embodiment, the liner has a downstream end portion that includes a patterned surface having a plurality of surface features formed thereon. The surface features may include a plurality of discrete protrusions and/or recesses in various configurations and shapes. In one embodiment, the discrete protrusions and/or recesses may be formed in both axial and circumferential directions about the downstream end portion of the liner with respect to the longitudinal axis of the liner. The discrete protrusions and/or recesses may be formed using any suitable technique, including but not limited to milling, casting, molding, and laser etching/cutting. In one embodiment, the surface features may define a non-linear flow path relative to a longitudinal flow path along the liner.

In operation, an annular wrapper having a plurality of openings extending radially therethrough may be configured to couple to the liner generally about the downstream end portion. The inner surface of the wrapper and the surface features on the downstream end portion collectively form a cooling channel which may receive an air flow through the plurality of inlets. The air flow may be a portion of the compressed air supplied to the combustor for combustion of fuel. As the air flows through the cooling channel and contacts the surface features, heat is transferred away from the combustor liner, particularly the downstream end portion of the liner, via forced air convection. In this manner, embodiments of the present invention may provide for enhanced heat transfer, thus improving uniformity in cooling (e.g., lower thermal gradients) with reduced overall pressure drop. Advantageously, this may improve overall turbine performance and increase the life of the combustor and/or combustor liner.

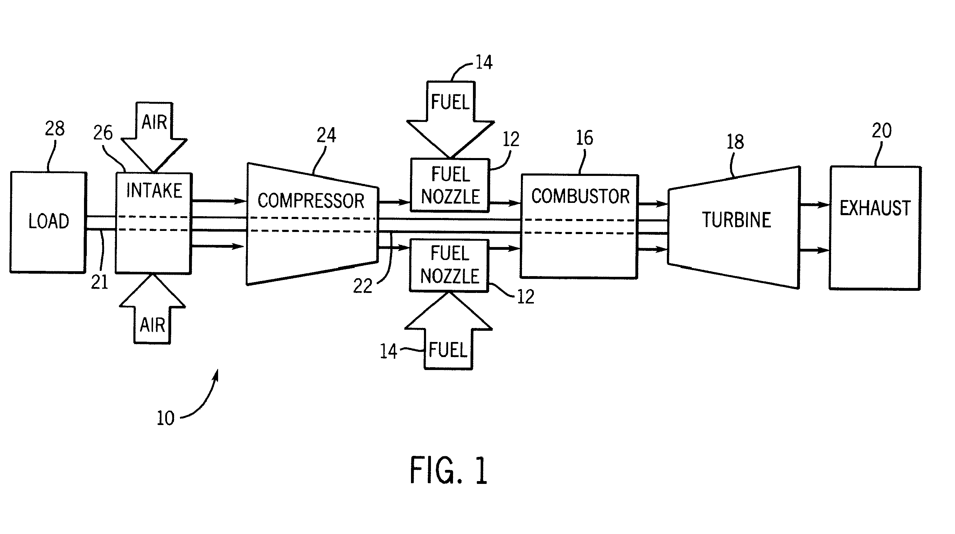

Turning now to the drawings and referring first to FIG. 1, a block diagram of an embodiment of a turbine system 10 is illustrated. As discussed in detail below, the disclosed turbine system 10 may employ a combustor liner having a plurality of surface features formed about a downstream end portion to provide for improved and more uniform cooling of the liner. The turbine system 10 may use liquid or gas fuel, such as natural gas and/or a hydrogen rich synthetic gas, to run the turbine system 10. As depicted, a plurality of fuel nozzles 12 intakes a fuel supply 14, mixes the fuel with air, and distributes the air-fuel mixture into a combustor 16. The air-fuel mixture combusts in a chamber within combustor 16, thereby creating hot pressurized exhaust gases. The combustor 16 directs the exhaust gases through a turbine 18 toward an exhaust outlet 20. As the exhaust gases pass through the turbine 18, the gases force one or more turbine blades to rotate a shaft 22 along an axis of system 10. As illustrated, the shaft 22 is connected to various components of turbine system 10, including a compressor 24. The compressor 24 also includes blades that may be coupled to shaft 22. Thus, blades within compressor 24 rotate as shaft 22 rotates, thereby compressing air from an air intake 26 through compressor 24 and into fuel nozzles 12 and/or combustor 16. The shaft 22 may also be connected to a load 28, which may be a vehicle or a stationary load, such as an electrical generator in a power plant or a propeller on an aircraft. As will be understood, the load 28 may include any suitable device that capable of being powered by the rotational output of turbine system 10.

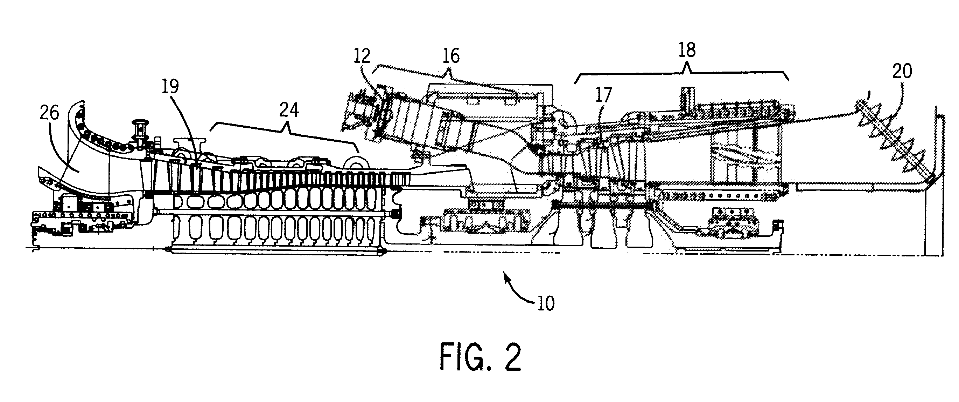

FIG. 2 illustrates a cutaway side view of an embodiment of the turbine system 10 schematically depicted in FIG. 1. The turbine system 10 includes one or more fuel nozzles 12 located inside one or more combustors 16. The combustors 16 may include one or more combustor liners disposed within one or more respective flow sleeves. As discussed above, the combustor liner (or liners) may include a patterned surface about a downstream end portion of the liner. The patterned surface may include a plurality of surface features. In some embodiments, the surface features may include a plurality of discrete protrusions and/or recesses arranged both axially and circumferentially with respect to a longitudinal axis of the liner about the downstream end portion.

In operation, air enters the turbine system 10 through the air intake 26 and may be pressurized in the compressor 24. The compressed air may then be mixed with gas for combustion within combustor 16. For example, the fuel nozzles 12 may inject a fuel-air mixture into the combustor 16 in a suitable ratio for optimal combustion, emissions, fuel consumption, and power output. The combustion generates hot pressurized exhaust gases, which then drive one or more blades 17 within the turbine 18 to rotate the shaft 22 and, thus, the compressor 24 and the load 28. The rotation of the turbine blades 17 causes rotation of shaft 22, thereby causing the blades 19 within the compressor 22 to draw in and pressurize the air received by the intake 26. As will be discussed in further detail below, the surface features on the downstream end portion of the liner may form a cooling channel with the inner surface of an annular wrapper mated (disposed) about the downstream end portion of a liner. The cooling channel may receive a portion of the air supplied to the combustor 16 through the air intake 26. In one embodiment, the cooling channel may receive approximately 2 percent of the total air supplied to the combustor 16 from the compressor 24. As the portion of the compressor-supplied air (which is generally substantially cooler relative to the combustion gases within the combustor 16) flows through the cooling channel and contacts the surface features, heat transfer occurs in which heat is removed from the combustor liner. By way of example, this heat transfer may occur via forced convection.

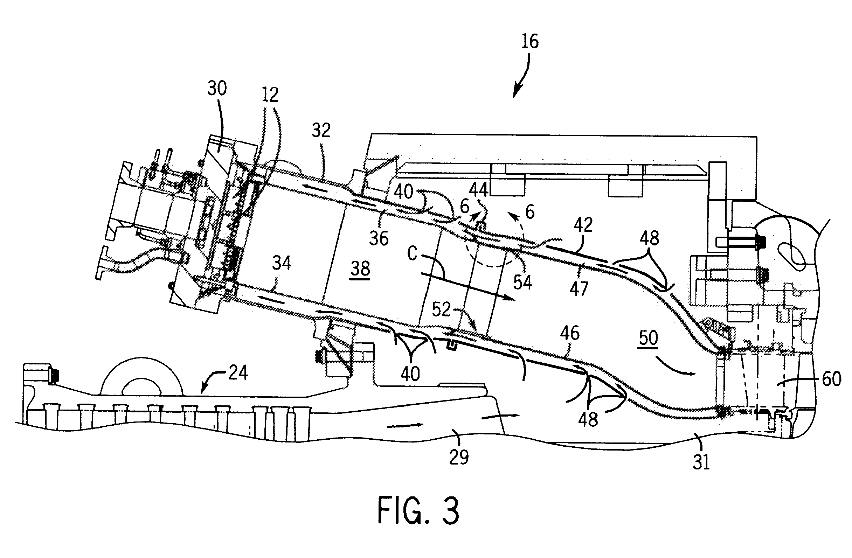

Continuing now to FIG. 3, a more detailed cutaway side view of an embodiment of the combustor 16, as shown FIG. 2, is illustrated. As will be appreciated, the combustor 16 is generally fluidly coupled to the compressor 24 and the turbine 18. The compressor 24 may include a diffuser 29 and a discharge plenum 31 that are coupled to each other in fluid communication as to facilitate the channeling of air downstream to the combustor 16. In the illustrated embodiment, the combustor 16 includes a cover plate 30 coupled to the upstream head end of the combustor 16. The cover plate 30 may at least partially support the fuel nozzles 12 and provide a path through which air and fuel are directed to the fuel nozzles 12.

The combustor 16 includes a combustor liner 34 disposed within a flow sleeve 32. The interior of the liner 34 may define a substantially cylindrical or annular combustion chamber 38. The arrangement of the liner 34 and the flow sleeve 32, as shown in FIG. 3, is generally concentric and may define an annular passage 36. The flow sleeve 32 may include a plurality of inlets 40, which provide a flow path for at least a portion of the air from the compressor 24 into the annular passage 36. In other words, the flow sleeve 32 may be perforated with a pattern of openings.

Downstream from the liner 34 and the flow sleeve 32 (e.g. in the direction C), a second flow sleeve 42, which may be referred to as an "impingement sleeve," may be coupled to the flow sleeve 32. Thus, the direction C may represent a downstream direction with respect to the flow of combustion gases away from the fuel nozzles 12 inside the liner 34. As used herein, the terms "upstream" and "downstream," when discussed in conjunction with a combustor liner, shall be understood to mean the proximal end of the combustor liner and the distal end of the combustor liner, respectively, with respect to the fuel nozzles. That is, unless otherwise indicated, the terms "upstream" and "downstream" are generally used with respect to the flow of combustion gases inside the combustor liner. For example, a "downstream" direction refers to the direction in which a fuel-air mixture combusts and flows from the fuel nozzles towards a turbine, and an "upstream" direction refers to the direction opposite the downstream direction, as defined above.

In the present embodiment, the flow sleeve 32 may include a mounting flange 44 configured to receive a portion of the impingement sleeve 42. A transition piece 46 (which may be referred to as a "transition duct") may be disposed within the impingement sleeve 42. A concentric arrangement of the impingement sleeve 42 and the transition piece 46 may define an annular passage 47. As shown, the annular passage 47 is fluidly coupled to the annular passage 36. The impingement sleeve 42 may include a plurality of inlets 48, which may provide a flow path for at least a portion of the air from the compressor 24 into the annular passage 47. An interior cavity 50 of the transition piece 46 generally provides a flow path (as shown by the arrow C) by which combustion gases from the combustion chamber 38 may be directed to the turbine 18. In the depicted embodiment, the transition piece 46 may be coupled to the downstream end of the liner 34 (in the direction C), generally about a downstream end portion 52 (coupling portion), as discussed above. An annular wrapper 54 and a seal may be disposed between the downstream end portion 52 and the transition piece 46. The inner surface of the wrapper 54 may form a cooling channel with the outer surface of the downstream end portion 52, which may include a patterned surface having a plurality of surface features to enhance cooling. A seal may secure the outer surface of the wrapper 54 to inner surface of the transition piece 46.

As discussed above, the turbine system 10, in operation, may intake air through the air intake 26. The compressor 24, which is driven by the shaft 22, rotates and compresses the air. The compressed air is discharged into the diffuser 29, as indicated by the arrows shown in FIG. 3. The majority of the compressed air is further discharged from the compressor 24, by way of the diffuser 29, through a plenum 31 into the combustor 16. Though not shown in detail here, a smaller portion of the compressed air may be channeled downstream for cooling of other components of the turbine engine 10. A portion of the compressed air within the plenum 31 may enter the annular passage 47 by way of the inlets 48. The air in the annular passage 47 is then channeled upstream (e.g., in the direction of fuel nozzles 12) towards the annular passage 36, such that the air flows over the downstream end portion 52 of the liner 34. A portion of this air flow is directed into the cooling channel formed by the wrapper 54 and the downstream end portion 52 in order to facilitate cooling of the combustor liner 34. In one embodiment, a plurality of inlets on the wrapper 54 may provide a flow path into the cooling channel. The portion of the air flow that is not discharged into the cooling channel continues to flow upstream into the annular passage 36 toward the cover plate 30 and fuel nozzles 12. Accordingly, the annular passage 36 may receive air from the annular passage 47 and the inlets 40. The air flowing into the annular passage 36 is then channeled upstream towards the fuel nozzles 12, wherein the air is mixed with fuel and ignited within the combustion chamber 38. The resulting combustion gases are channeled from the chamber 38 into the transition piece cavity 50 and through the turbine nozzle 60 to the turbine 18.

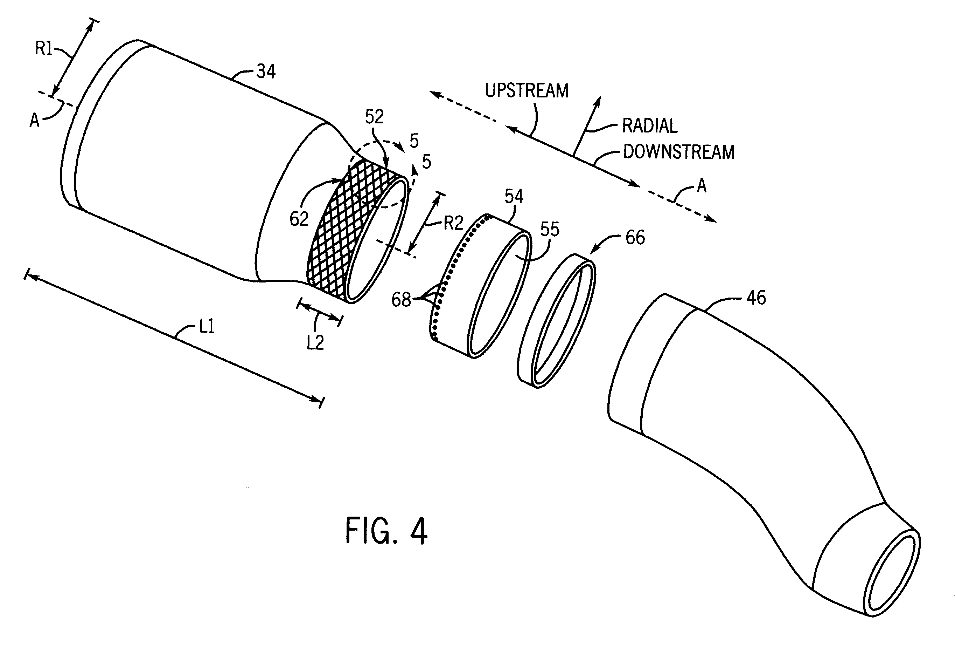

FIG. 4 is an exploded perspective view intended to provide a better understanding of the relationship between the liner 34, the wrapper 54, and the transition piece 46. The liner 34 may have a length of L1 when measured along a longitudinal axis A. In the illustrated embodiment, a radius R1 of the upstream end of the liner 34 may be greater than a radius R2 of the downstream end of the liner 34. In other embodiments, however, the radii R1 and R2 may be equal or the radius R2 may be greater than the radius R1. The liner 34 includes the downstream end portion 52. As discussed above, the downstream end portion 52 is a portion of the liner having an axial length L2 which, when measured from the downstream (aft-most) end of the liner 34, is less than the total length L1 of the liner 34. In one embodiment, the length L2 of the downstream end portion 52 may be approximately 10-20 percent of the total length L1 of the liner. However, it should be appreciated that in other embodiments, depending on implementation specific goals, the length L2 could be greater than 20 percent or less than 10 percent of L1. For example, in other embodiments, the longitudinal length L2 of the downstream end portion 52 may be at least less than 5, 10, 15, 20, 25, 30, or 35 percent of the total length L1.

The wrapper 54 is configured to mate with the liner 34 generally about the downstream end portion 52 in a telescoping, coaxial, or concentric overlapping relationship. An inner surface 55 of the wrapper 54 and the patterned outer surface 62 of the downstream end portion 52 may form an annular cooling channel. As shown, the wrapper 54 may include a plurality of inlets 68 generally near the upstream end of the wrapper 54. In the illustrated embodiment, the inlets 68 are depicted as a plurality of openings disposed circumferentially (relative to the axis A) about the upstream end of the wrapper 54 and also extending radially therethrough. The openings defined by the inlets 68 may include holes, slots, or a combination of holes and slots, for example. The inlets 68 provide a flow path into the cooling channel. As will be discussed in further detail below, the compressed air, which is substantially cooler relative to the temperature of the combustion gases within the combustion chamber 38, flows over the patterned surface 62 and contacts the surface features, which may include a plurality of discrete protrusions (and/or recesses) and, in doing so, enhances the heat transfer away from the liner 34 to cool the liner 34. The transition piece 46 is coupled to the liner 34 generally about the downstream end portion 52 and the wrapper 54. A sealing ring 66 may be disposed between the wrapper 54 and the transition piece 46 to facilitate the coupling.

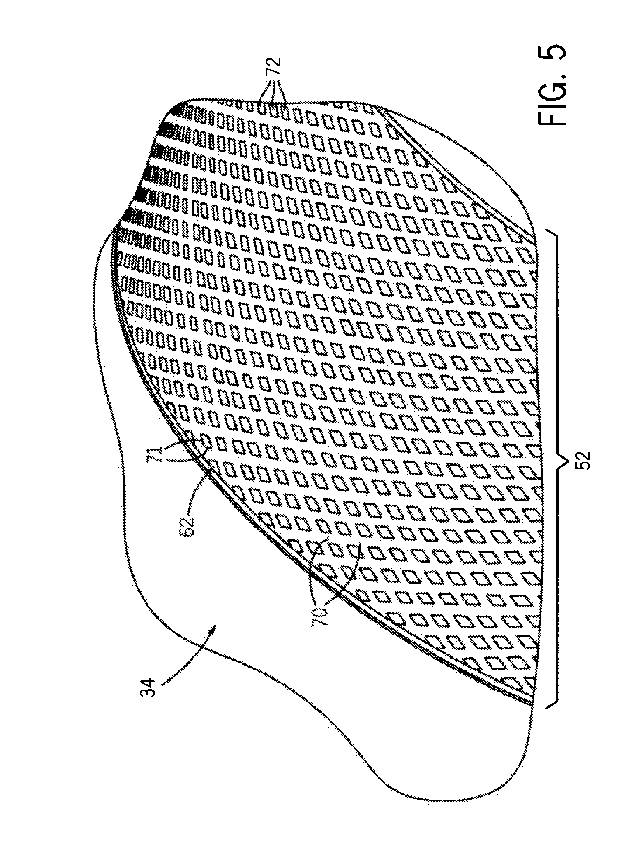

FIG. 5 is a partial perspective view of one embodiment of the patterned surface 62 on the downstream end portion 52 of the liner 34 within the circular region defined by the arcuate line 5-5, as shown in FIG. 4. As discussed above, the patterned surface 62 may include a plurality of surface features 72. In the illustrated embodiment, the surface features 72 may be a plurality of discrete substantially diamond-shaped protrusions arranged axially and circumferentially with respect to the longitudinal axis A of the liner 34. The diamond shaped protrusions may be defined by a plurality of grooves 70 configured in a criss-cross pattern across the length L2 of the downstream end portion 52 such that the diamond-shaped protrusions are the raised portions between the grooves 70. For example, the grooves 70 may criss-cross in a non-parallel manner relative to the axis A, or in a parallel manner relative to the axis A. However, the illustrated grooves 70 are non-parallel to the axis A and thus are transverse to the axis A.

As used herein, the term "groove" shall be understood to mean the portion of the outer surface of the downstream end portion 52 of the liner 34 that is recessed or removed in order to define discrete protruding surface features 72. As will be appreciated, the grooves 70 may be formed in any suitable manner, including milling, casting, molding, and laser etching/cutting. In the present embodiment, the grooves 70 define a non-linear flow path relative to the longitudinal axis A of the liner 34. In other embodiments, the grooves may define a linear flow path relative to the longitudinal axis A. Further, it shall be appreciated that the grooves 70 may be configured to define protrusions having different geometric shapes, as will be shown in the additional figures below. In one embodiment, the grooves 70 may have a depth of at least less than approximately 1, 2, 3, 4, or 5 millimeters with respect to the surface features 72. In additional embodiments, the grooves 70 may have a depth of greater than 5 millimeters. Further, the width of the grooves 70, in one embodiment, may be at least less than approximately 1, 2, 3, 4, 5, 6, 7, 8, 9, or 10 millimeters. The width of the grooves 70, in another embodiment, may have a range of approximately 2 to 8 millimeters. Still further, in yet another embodiment, the grooves 70 may have a width of greater than 10 millimeters. Additionally, protruding surface features 72 may be formed having various lengths and widths. For instance, in one embodiment, where the surface features 72 are substantially diamond-shaped, as shown in FIG. 5, each edge 71 may be at least less than approximately 5, 6, 7, 8, 9, 10, 11, 12, or 13 millimeters. In additional embodiments, the edge 71 may also be less than 5 millimeters or greater than 13 millimeters.

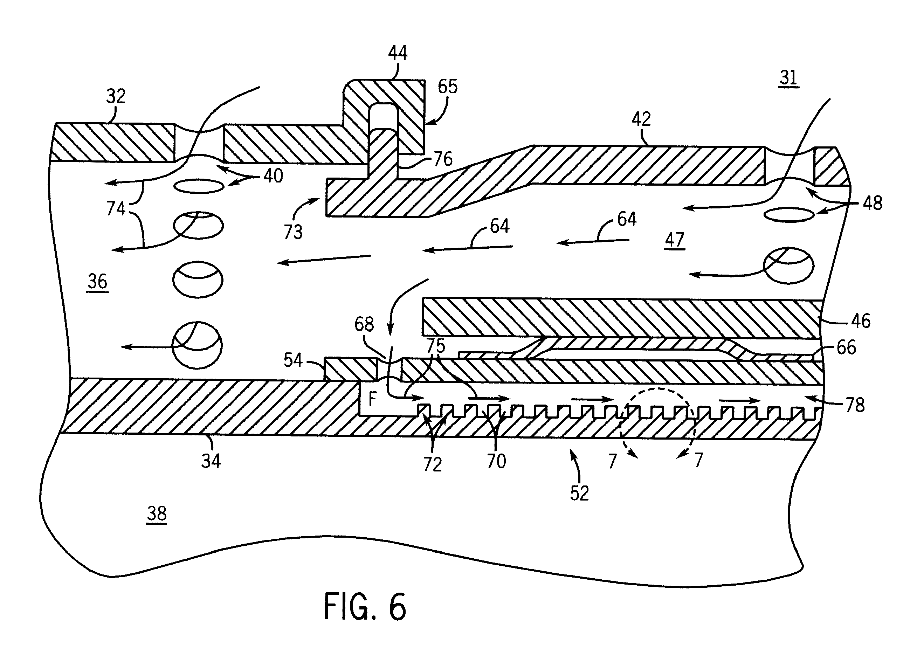

Referring now to FIG. 6, a partial cross-sectional side view of the combustor 16 within the circular region defined by the arcuate line 6-6 in FIG. 3 is illustrated. Particularly, FIG. 6 shows in more detail the air flow into the cooling channel 78 formed by the wrapper 54 and the downstream end portion 52 of the liner 34. Compressed air discharged by the compressor 24 may be received in the annular passage 47 (defined by the impingement sleeve 42 and the transition piece 46) through the inlets 48. In the present embodiment, the inlets 48 are circular-shaped holes, although in other implementations, the inlets 48 may be slots, or a combination of holes and slots of other geometries. As the air 64 within the annular passage 47 is channeled upstream, the majority of the air 64 is discharged into the annular passage 36 (defined by the flow sleeve 32 and the liner 34). As discussed above, the flow sleeve 32 may include the mounting flange 44 at the downstream end 65 configured to receive a member 76 extending radially outward from the upstream end 73 of the impingement sleeve 42, thereby coupling the flow sleeve 32 and impingement sleeve 42. In addition to receiving the air flow 64 from the annular passage 47, the annular passage 36 also receives a portion 74 of the compressed air from the plenum 31 by way of the inlets 40. In other words, the airflow within the annular passage 36 may include air 64 discharged from the annular passage 47 and air 74 flowing through the inlets 40. Additionally, it should be understood that like the inlets 48 on the impingement sleeve 42, the inlets 40 may also include holes, slots, or a combination thereof, of various shapes.

While a majority of the air flowing through the annular passage 47 is discharged into the annular passage 36, a portion of the air flow, shown here by the reference number 75, may be directed into the cooling channel 78 by way of a flow path F provided by the plurality of inlets 68 on the wrapper 54. The flow path F may define an airflow through surface features 72 within the channel 78. As shown, the flow path F is opposite to the flow path through the annular passages 36 and 47. In other words, flow path F is directed downstream and away from (as opposed to upstream and towards) the end cover 30 and the fuel nozzles 12. In one embodiment, the air 75 directed into the cooling channel 78 may represent at least less than approximately 1, 2, 3, 4, 5, 6, 7, 8, 9, or 10 percent of the total compressed air supplied to the combustor 16. In other embodiments, the air 75 directed into the cooling channel 78 may be more than 10 percent of the total compressed air supplied to the combustor 16. The air 75 entering the cooling channel 78 flows along the flow path F and contacts a plurality of surface features 72 on the downstream end portion 52 of the liner 34. As discussed above, the surface features 72 may be defined as a plurality of discrete protrusions between the grooves 70. Further, as will be understood, the airflow within the cooling channel 78 is generally substantially cooler relative to the temperature of the combustion gases within the combustion chamber 38. Thus, as the air 75 within the channel 78 flows along the flow path F and contacts the surface features 72, heat may be transferred away from the combustor liner 34. By way of example, the mechanism employed in cooling the liner 34 may be forced convective heat transfer resulting from the contact between the cooling air 75 and the surface features 72. The flow path F may continue along the length of the cooling channel 78 (substantially the length L2), wherein the cooling air exits the cooling channel 78 at a downstream end (not shown), thereby discharging into the transition piece cavity 50, whereby the cooling air 75 is directed towards combustion gases flowing downstream (away from the fuel nozzles 12) through the transition piece cavity 50.

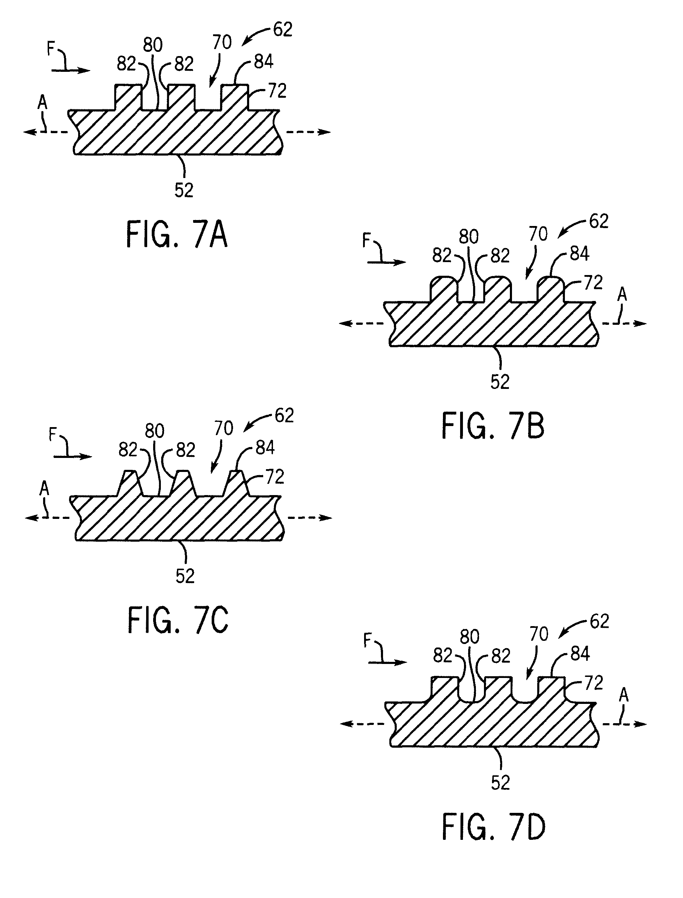

As discussed above, the surface features 72 may be defined by forming a plurality of grooves 70 on the downstream end portion 52 of the liner 34. That is, the surface features 72 protrude from the outer surface of the downstream end portion 52 of the liner 34 generally between the grooves 70. Continuing now to FIGS. 7A-7D, several embodiments are shown in which the grooves 70 are formed having different shapes. Particularly, these figures illustrate in more detail the grooves 70 and the surface features 72 on the downstream end portion 52 of the liner 34 within the circular region defined by the arcuate line 7-7 in FIG. 6.

Referring first to FIG. 7A, the grooves 70 may be formed such that the bottom surface 80 of the each groove 70 has a substantially flat surface and such that the walls 82 of each groove are adjoined to the bottom surface 80 to form a substantially right angle (90 degrees) with respect to the bottom surface 80. The walls 82 concurrently serve as the sidewalls of each surface feature 72 and are substantially straight such that the surface 84 of each of the surface features 72 is substantially flat.

In an alternate embodiment shown in FIG. 7B, each groove 70 may have a substantially flat bottom surface 80 forming substantially right angles with each wall 82. In this embodiment, an upper portion of the walls 82 is rounded. As a result, each surface feature 72 may be formed with a rounded top surface 84. In a further embodiment, as shown in FIG. 7C, each groove 70 has a substantially flat bottom surface 80. In this configuration, each of the walls 82 may form angles greater than 90 degrees (e.g., diverging) with respect to the bottom surface 80. That is, the width of the groove 70 measured from bottom surface 80 may be less than the width of the groove 70 measured at the top of each wall 82 (e.g., planar with the surface 84 of each surface feature 72). Finally, in the embodiment illustrated in FIG. 7D, each groove 70 may be formed such that the bottom surface 80 is adjoined to each of the walls 82 via a rounded edge. As will be appreciated, the grooves 70 may be formed in any suitable manner, including casting, milling, molding, and laser cutting/etching. As discussed above, the grooves 70 may define a flow path F through the patterned surface on the downstream end portion 52 of the combustor liner 34. The flow path F defined by the grooves 70 may be linear or non-linear with respect to an axial flow path (e.g. along the longitudinal axis A) of the liner 34.

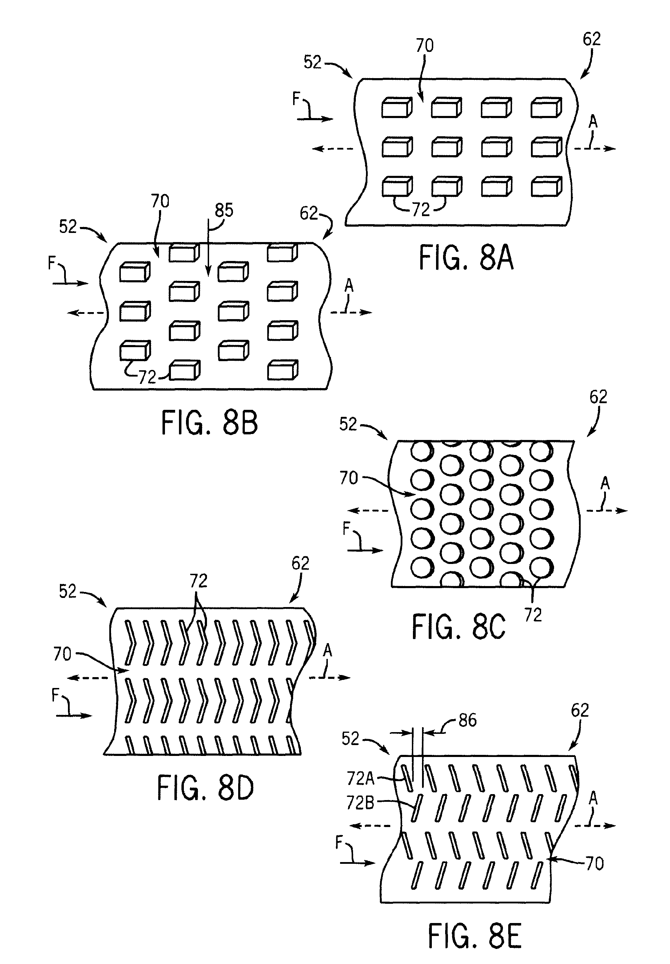

While the above discussed embodiments may have a patterned surface 62 with a plurality of diamond-shaped surface features 72 protruding from the surface of the downstream end portion 52, the surface features 72 in other embodiments may be formed in a variety of configurations and shapes. Referring now to FIGS. 8A-8E, top views of different embodiments showing the surface features 72, which act as convective heat transfer members, in a variety of alternate shape configurations are illustrated. As shown in FIG. 8A, the surface features 72 may be formed as generally rectangular-shaped or square-shaped fins protruding from the surface of the downstream end portion 52 of the liner 34. In this embodiment, the grooves 70 are formed such that the flow path F is linear relative to an axial flow path along the liner 34 (e.g., axial with respect to longitudinal axis A). In other words, the surface features 72 are directly in line with one another axially in series along the axis A. In FIG. 8B, an embodiment similar to that of FIG. 8A is shown, except that the fin surface features 72 are arranged such that the flow path F is non-linear in the axial direction with respect to the longitudinal axis A. That is, the surface features are staggered with respect to one another or overlap one another along the axis A. Additionally, in this embodiment, a circumferential flow path 85 (orthogonal with respect to F) is linear through the fin surface features 72. However, it should be appreciated that in further embodiments, the axial flow path (F) and the circumferential flow path 85 may both be non-linear.

FIG. 8C illustrates another embodiment of the patterned surface in which the surface features 72 are formed as cylindrical members protruding from the surface of the downstream end portion 52 of the liner 34. In this embodiment, the grooves 70 are the non-raised portions of the downstream end portion 52 between each of the cylindrical members 70. FIG. 8D shows yet another embodiment in which the surface features 72 are generally chevron-shaped. In the present embodiment, the chevron-shaped surface features 72 are arranged to define a linear flow path F with respect to the longitudinal axis A, although in other embodiments, the chevron-shaped surface features 72 may be arranged in a staggered or overlapping relationship, such that the flow path F is non-linear with respect to the longitudinal axis A. Also in the present embodiment, the chevron-shaped surface features 72 are shown as pointing towards the downstream end of the combustor liner 34. Other embodiments may utilize chevron-shaped surface features 72 pointing in the opposite direction (e.g., towards the upstream end of the liner 34). In another embodiment, the chevron-shaped surface features 72 may be broken and staggered, as shown in FIG. 8E. Each portion 72A and 72B of the broken chevron may be spaced axially with respect to the longitudinal axis A by a distance, referred to in the figure by the reference number 86.

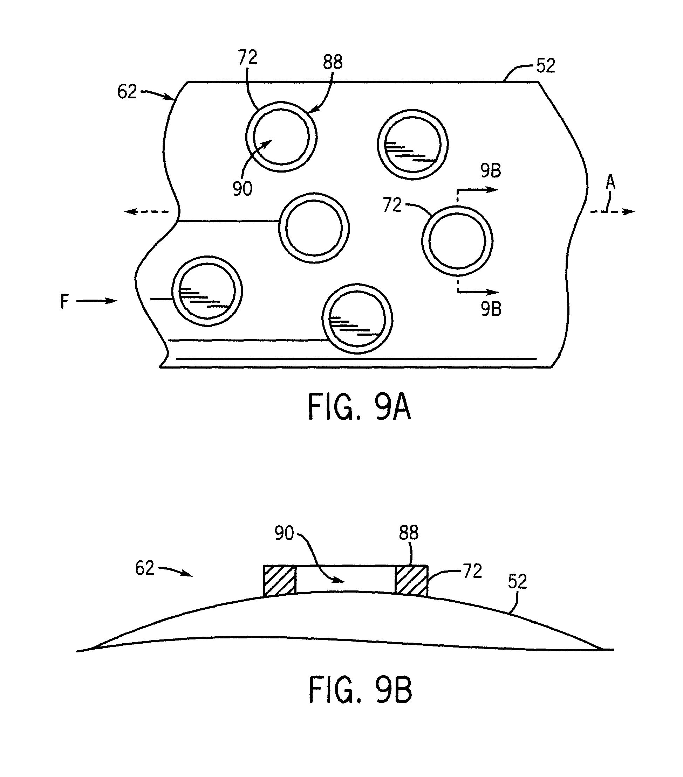

Continuing to FIG. 9A, a further embodiment of the patterned surface 62 is illustrated in which the surface features 72 are formed as a plurality of circular ring-shaped protrusions extending from the outer surface of the downstream end portion 52 of the liner 34. As will be appreciated, the ring-shaped surface features 72 may be arranged such that the flow path F through the patterned surface 62 is linear or non-linear with respect to the axis A. Each ring-shaped surface feature 72 is defined by a raised peripheral edge 88 that creates an enclosed area 90 within the ring. In other words, the ring-shaped surface feature 72 is a hollow annular structure defining a cylindrical enclosed area 90. FIG. 9B illustrates a cross-sectional view of a ring-shaped protrusion taken along the line 9B-9B, as shown in FIG. 9A. As shown, the peripheral edge 88 defining the enclosed area 90 may be substantially square-shaped in cross-section, which defines the hollow annular structure 360 degrees about the cylindrical enclosed area 90. In other embodiments, however, it should be appreciated that the peripheral edge 88 may have alternate cross-sectional shapes. For example, the peripheral edge 88 may have a generally trapezoidal cross-sectional shape.

With respect to the embodiments shown above by way of example, it should be appreciated a variety of additional embodiments of the present cooling techniques not described in specificity herein may exist. For example, in some embodiments, the height of the surface features 72 may be uniform or may vary across the downstream end portion 52 of the combustor liner 34. In other embodiments, the surface pattern 62 on the downstream end portion 52 may include a variety of different surface features, such as a combination of the surface feature shapes discussed above. In yet another embodiment, the surface pattern 62 may include surface features 72 that are uniform in shape, but vary in size. Further, it should be appreciated that the presently disclosed cooling techniques may be used in conjunction with other cooling techniques to facilitate the cooling of the combustor liner 34. For instance, in some embodiments, a patterned surface 62 may cover the entire outer surface of the combustor liner 34, rather than just the downstream end portion 52. Likewise, the patterned surface may be disposed on the liner 34, the transition piece 46, or both.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a turbine engine comprising:
      a combustor having an annular liner with a downstream end portion relative to a downstream direction of combustion along a longitudinal axis of the combustor, wherein the downstream end portion comprises a patterned surface with a non-linear arrangement of surface features relative to the longitudinal axis.
2. The system of clause 1, wherein the surface features are generally diamond shaped.
3. The system of clause 1, wherein the non-linear arrangement of the surface features generally defines a criss-cross pattern relative to the longitudinal axis.
4. The system of clause 1, wherein the patterned surface is disposed on the outer surface of the downstream end portion of the annular liner.
5. The system of clause 1, wherein an axial length of the downstream end portion is less than or equal to approximately 20 percent of a total axial length of the annular liner.
6. The system of clause 1, wherein the combustor comprises an annular wrapper disposed about the downstream end portion of the annular liner, wherein the patterned surface on the downstream end portion and an inner surface of the annular wrapper form an annular cooling channel.
7. The system of clause 6, wherein the annular wrapper comprises a plurality of openings extending radially through the annular wrapper to the annular cooling channel.
8. The system of clause 7, wherein the combustor comprises an annular transition piece coupled to the annular liner about the annular wrapper.
9. The system of clause 8, comprising one or more annular flow sleeves disposed about the annular liner and the annular transition piece, wherein the annular flow sleeves, the annular liner, and the annular transition piece define an annular flow path in an upstream direction opposite to the downstream direction, wherein the annular cooling channel defines an annular cooling flow path in the downstream direction.
10. A system comprising:
   a turbine combustor liner comprising a patterned surface at a downstream end portion relative to a downstream direction of combustion along a longitudinal axis of the turbine combustor liner, wherein the patterned surface comprises a plurality of discrete protrusions in both axial and circumferential directions about the downstream end portion relative to the longitudinal axis.
11. The system of clause 10, wherein the discrete protrusions are arranged in a non-linear manner relative to the longitudinal axis.
12. The system of clause 10, wherein a geometry of the discrete protrusions comprises at least one of diamonds, fins, cylinders, rings, chevrons, or broken chevrons, or a combination thereof.
13. The system of clause 10, wherein an axial length of the downstream end portion is less than or equal to approximately 20 percent of a total axial length of the turbine combustor liner.
14. The system of clause 10, comprising a first flow sleeve disposed about the turbine combustor liner, wherein a first inner annular surface of the first flow sleeve and an outer annular surface of the turbine combustor liner define a first annular flow passage.
15. The system of clause 14, comprising an annular transition piece coupled to the turbine combustor liner about the patterned surface and downstream from the turbine combustor liner.
16. The system of clause 15, comprising an annular wrapper disposed between the annular transition piece and the turbine combustor liner about the downstream end portion, wherein the patterned surface on the downstream end portion of the turbine combustor liner and an inner surface of the annular wrapper define an annular cooling channel.
17. The system of clause 15, comprising a second flow sleeve disposed about the annular transition piece, wherein a second inner annular surface of the second flow sleeve and an outer surface of the annular transition piece define a second annular flow passage, wherein the second annular flow passage is coupled to the first annular flow passage.
18. The system of clause 10, comprising a turbine engine, a combustor, or a combination thereof, having the turbine combustor liner.
19. A method comprising:
   cooling a turbine combustor liner via an airflow along a flow path through a patterned surface having a plurality of discrete protrusions in both axial and circumferential directions about a downstream end portion of the turbine combustor liner.
20. The method of clause 19, wherein the flow path is non-linear relative to a longitudinal flow path along the turbine combustor liner.

## Claims

1. A system comprising:
a turbine combustor liner (34) comprising a patterned surface (62) at a downstream end portion (52) relative to a downstream direction of combustion along a longitudinal axis of the turbine combustor liner (34), wherein the patterned surface (62) comprises a plurality of discrete protrusions (72) in both axial and circumferential directions about the downstream end portion (52) relative to the longitudinal axis.

2. The system of claim 1, wherein the discrete protrusions (72) are arranged in a non-linear manner relative to the longitudinal axis.

3. The system of claim 1 or 2, wherein a geometry of the discrete protrusions (72) comprises at least one of diamonds, fins, cylinders, rings, chevrons, or broken chevrons, or a combination thereof.

4. The system of any one of the preceding claims, wherein an axial length of the downstream end portion (52) is less than or equal to approximately 20 percent of a total axial length of the turbine combustor liner (34).

5. The system of any one of the preceding claims, comprising a first flow sleeve (32) disposed about the turbine combustor liner (34), wherein a first inner annular surface of the first flow sleeve (32) and an outer annular surface of the turbine combustor liner (34) define a first annular flow passage (36).

6. The system of claim 5, comprising an annular transition piece (46) coupled to the turbine combustor liner (34) about the patterned surface (62) and downstream from the turbine combustor liner (34).

7. The system of claim 6, comprising an annular wrapper (54) disposed between the annular transition piece (46) and the turbine combustor liner (34) about the downstream end portion (52), wherein the patterned surface (62) on the downstream end portion (52) of the turbine combustor liner (34) and an inner surface of the annular wrapper (54) define an annular cooling channel (78).

8. The system of claim 6, comprising a second flow sleeve (42) disposed about the annular transition piece (46), wherein a second inner annular surface of the second flow sleeve (42) and an outer surface of the annular transition piece (46) define a second annular flow passage (47), wherein the second annular flow passage (47) is coupled to the first annular flow passage (36).

9. A method comprising:
cooling a turbine combustor liner (34) via an airflow along a flow path through a patterned surface (62) having a plurality of discrete protrusions (72) in both axial and circumferential directions about a downstream end portion (52) of the turbine combustor liner (34).

10. The method of claim 9, wherein the flow path is non-linear relative to a longitudinal flow path along the turbine combustor liner (34).

11. A system comprising:
a turbine engine comprising:
a combustor having an annular liner with a downstream end portion relative to a downstream direction of combustion along a longitudinal axis of the combustor, wherein the downstream end portion comprises a patterned surface with a non-linear arrangement of surface features relative to the longitudinal axis.

12. The system of claim 11, wherein the surface features are generally diamond shaped.

13. The system of claim 11 or 12, wherein the non-linear arrangement of the surface features generally defines a criss-cross pattern relative to the longitudinal axis.

14. The system of any of claims 11 to 13, wherein the patterned surface is disposed on the outer surface of the downstream end portion of the annular liner.

15. The system of any of claims 11 to 14, wherein the combustor comprises an annular wrapper disposed about the downstream end portion of the annular liner, wherein the patterned surface on the downstream end portion and an inner surface of the annular wrapper form an annular cooling channel.
